Europäisches Patentamt

European Patent Office

Office européen des brevets

(19)

(11) Veröffentlichungsnummer: **0 458 117 A2**

## (12) EUROPÄISCHE PATENTANMELDUNG

(21) Anmeldenummer: 91107350.0

(51) Int. Cl.5: **B65G 45/14**

(22) Anmeldetag: 07.05.91

(30) Priorität: 19.05.90 DE 9005724 U
30.11.90 DE 4038188

(43) Veröffentlichungstag der Anmeldung:
**27.11.91 Patentblatt 91/48**

(84) Benannte Vertragsstaaten:
**DE FR GB**

(71) Anmelder: **Walter Becker GmbH**
**Barbarastrasse 12**
**W-6605 Friedrichsthal (Saar)(DE)**

(72) Erfinder: **Lorenz, Peter, Prof. Dr.-Ing.**
**Keplerstrasse 6**
**W-6600 Saarbrücken(DE)**
Erfinder: **Jungen, Klaus**
**Abteistrasse 11**
**W-6695 Tholey(DE)**
Erfinder: **Huwer, Hans Werner**
**Im Schützenrech 47**
**W-6580 Idar-Oberstein(DE)**

(74) Vertreter: **Bernhardt, Winfrid, Dr.-Ing.**
**Kobenhüttenweg 43**
**W-6600 Saarbrücken(DE)**

(54) **Abstreifer für ein Förderband.**

(57) Ein Abstreifer für ein Förderband weist eine quer zu dem Förderband ausgerichtete, mit einer Kante an ihm anliegende Abstreifleiste (2) auf. Die Abstreifleiste (2) ist für eine Hin- und Herbewegung axial verschiebbar gelagert (4,5) und durch eine an dem Förderband reibschlüssig anliegende Rolle (10) bewegt. Die Rolle (10) ist zu diesem Zweck über mindestens ein Exzenter (8;9) und eine gelenkig in einem spitzen Winkel ($\alpha;\beta$) zu der Abstreifleiste (2) angreifende Stange (6) oder über zwei um 180° versetzte Exzenter und zwei in einem spitzen Winkel zu der Abstreifleiste angreifende Zugelemente mit der Abstreifleiste gekoppelt, derart, daß von der einen bis zur anderen Extremstellung des Exzenters (8;9) die Stange (6) unter Vergrößerung des Winkels ($\alpha;\beta$) zieht und von der anderen zur einen Extremstellung des Exzenters (8;9) unter Verkleinerung des Winkels ($\alpha;\beta$) drückt bzw. die beiden Zugelemente abwechselnd von der einen bis zur anderen Endstellung der Exzenter ziehen.

Fig. 3

Rank Xerox (UK) Business Services

Die Erfindung betrifft einen Abstreifer für ein Förderband, der eine quer zu dem Förderband ausgerichtete, mit einer Kante an ihm anliegende Abstreifleiste aufweist, die mittels eines Antriebs in ihrer Längsrichtung bewegt ist.

Ein solcher Abstreifer ist aus der DE-OS 36 08 812 bekannt. Die Abstreifleiste wird nach dem dortigen Vorschlag durch einen Trum eines endlosen, durch einen Motor angetriebenen Bandes gebildet.

Die der Bewegung des Förderbandes überlagerte Bewegung des Abstreif-Bandes in Querrichtung erzeugt einen weiteren Reibeffekt ähnlich einer Schneidwirkung.

Der Erfindung liegt die Aufgabe zugrunde, einen einfacheren Abstreifer der eingangs genannten Art zu schaffen.

Gemäß der Erfindung wird dieser Zweck dadurch erfüllt, daß der Antrieb durch eine an dem Förderband reibschlüssig anliegende Rolle gebildet ist.

Damit entfällt nicht nur der Motor mit den im Bergbau mit ihm verbundenen Problemen, sondern vor allem auch seine Steuerung. Die Rolle läuft und steht mit dem Förderband. Sie ist einfach und robust und hat eine zur unmittelbaren Verwendung geeignete Drehzahl.

Der Abstreifer kann dabei grundsätzlich von verschiedenster Bauart sein. Er kann aus einem Abstreifband bestehen, wie nach dem erwähnten Stand der Technik, aber auch aus einer hin- und herbewegbar gelagerten Abstreifleiste. Letzteres erfordert dann nur eine Umwandlung der Drehbewegung in Hin- und Herbewegung, wofür die Technik verschiedenste Lösungen kennt.

Eine für den vorliegenden Fall besonders geeignete, weil wiederum einfache und robuste, Lösung wird als Weiterbildung der Erfindung wie folgt vorgeschlagen:

Die Rolle ist über mindestens ein Exzenter und eine gelenkig in einem spitzen Winkel zu der Abstreifleiste angreifende Stange oder über zwei um 180° versetzte Exzenter und zwei in einem spitzen Winkel zu der Abstreifleiste angreifende Zugelemente mit der Abstreifleiste gekoppelt, derart, daß von der einen bis zur anderen Extremstellung des Exzenters die Stange unter Vergrößerung des Winkels zieht und von der anderen zur einen Extremstellung des Exzenters unter Verkleinerung des Winkels drückt bzw. die beiden Zugelemente abwechselnd von der einen bis zur anderen Extremstellung der Exzenter ziehen.

Vorzugsweise ist die Rolle über zwei um 180° versetzte Exzenter und zwei Stangen mit der Abstreifleiste gekoppelt. Damit ist das Höchstmaß an Kraftübertragung möglich.

Die beiden um 180° versetzten Exzenter sind zweckmäßigerweise an den beiden verschiedenen Stirnseiten der Rolle angeordnet, obgleich mit einer Art gekröpfter Welle auch die Anordnung dazwischen oder an derselben Seite möglich wäre.

Um in dem Winkel unmittelbar oder mittelbar an der Abstreifleiste anzugreifen, können die beiden Stangen oder Zugelemente von der Rolle aus divergieren oder, da die Rolle zweckmäßigerweise die Breite des Förderbandes hat, auch konvergieren.

Die Stangen können und werden in der Regel mehrgliedrig sein. Zweckmäßigerweise weisen sie kurze Endglieder auf, die an den Enden einerseits das Exzenterlager und andererseits ein Drehlager aufweisen, in dem die Stangen dem Exzenterumlauf folgend schwenkbar sind, und die mit dem dazwischenliegenden Hauptteil der Stangen durch Gelenke verbunden sind, in denen die Stangen der genannten Vergrößerung und Verkleinerung ihres genannten Angriffwinkels folgend schwenkbar sind. Diese Unterteilung entspricht den beiden unterschiedlichen Funktionen.

Um bei den Umkehrungen der Zug- und Druckrichtungen der Stangen und der Zugelemente Schläge zu mildern, kann man die axiale Lagerung der Abstreifleiste in Förderbandlaufrichtung etwas nachgiebig haltern oder auch einen Dämpfer in die Stangen oder Zugelemente einbauen.

Schließlich eröffnet die Erfindung in ihrer Variante der hin- und herbewegten Abstreifleiste die vorteilhafte Möglichkeit, daß die Abstreifleiste aus einer, vorzugsweise zur Förderbandebene senkrechten, Normalstellung in Förderbandlaufrichtung herausschwenkbar ist und die Schwenkachse durch zwei an die Abstreifleiste angesetzte Achsschenkel gebildet ist, die drehbar und axial verschiebbar gelagert sind und an denen die Stangen bzw. Zugelemente mit Drehlagern angreifen.

In dieser Weise wird mit einfachsten Mitteln die schneidende Querbewegung der Abstreifleiste zum Förderband kombiniert mit der bei solcher Querbewegung bisher nicht möglichen Nachgiebigkeit der Abstreifleiste durch Abschwenken in der Förderbandlaufrichtung, wenn ein größeres Schmutzteil fest an dem Förderband haftet.

Gleichermaßen wird die bisher nicht gegebene Möglichkeit eröffnet, die Abstreifleiste mit einem in Normalstellung senkrecht zur Förderbandebene federnd nachgiebig gehaltenen Abstreifblatt zu versehen, das ebenfalls, zusätzlich zu dem Abschwenken oder statt des Abschwenkens, größeren am Förderband haftenden Schmutzteilen oder Unebenheiten am Förderband selbst ausweicht.

Die Zeichnung gibt ein Ausführungsbeispiel der Erfindung wieder.

Fig. 1      zeigt einen Abstreifer für ein Förderband, teilweise weggebrochen, in perspektivischer Darstellung,

Fig. 2      zeigt einen Ausschnitt aus Fig. 1 in größerem Maßstab,

Fig. 3   und

Fig. 4   zeigen in der Draufsicht auf den Abstreifer Funktionsbilder.

Unter dem Untertrum eines Förderbandes 1 ist kurz hinter der Umlenk- und Abwurfstelle des Förderbandes eine Abstreifleiste 2 angeordnet. Die Abstreifleiste 2 steht in der gezeichneten Normalstellung senkrecht zu dem Förderband 1. Sie drückt an das Förderband mit der Kante eines Abstreifblattes 3, das aus der übrigen Abstreifleiste verschiebbar und gefedert herausragt. Die Abstreifleiste 2 ist mit zwei Achsschenkeln 4, die sie an ihren beiden Enden fortsetzen, in Lagern 5 drehbar und axial verschiebbar gelagert.

Zwei Stangen 6 halten die Abstreifleiste 2 in ihrer zu dem Förderband 1 senkrechten oder einer abgewinkelten Stellung und vermitteln ihr eine Hin- und Herbewegung in ihrer Längsrichtung, d.h. quer zum Förderband, wie folgt:
Die Stangen 6 sind einerseits durch axial feste Drehlager 7 mit den Achsschenkeln 4 verbunden und andererseits mit um 180° versetzten Exzentern 8 und 9, die an den beiden Stirnseiten einer an dem Förderband 1 anliegenden Rolle eingerichtet sind. Ein Endglied 11 der Stangen 6, das in der Wirklichkeit kürzer ist als in der Zeichnung, sitzt mit dem Drehlager 7 in seiner mit dem Achsschenkel 4 gemeinsamen Ebene winkelsteif auf dem Achsschenkel 4. Ein Endglied 12 am anderen Ende der Stangen 6 sitzt in entsprechender Weise winkelsteif mit dem Exzenterlager 13 auf der exzentrischen Achse 14. Der Hauptteil der Stangen 6 ist mit den Endgliedern durch Gelenke 15 verbunden, deren Achsen senkrecht zu der genannten gemeinsamen Ebene angeordnet sind.

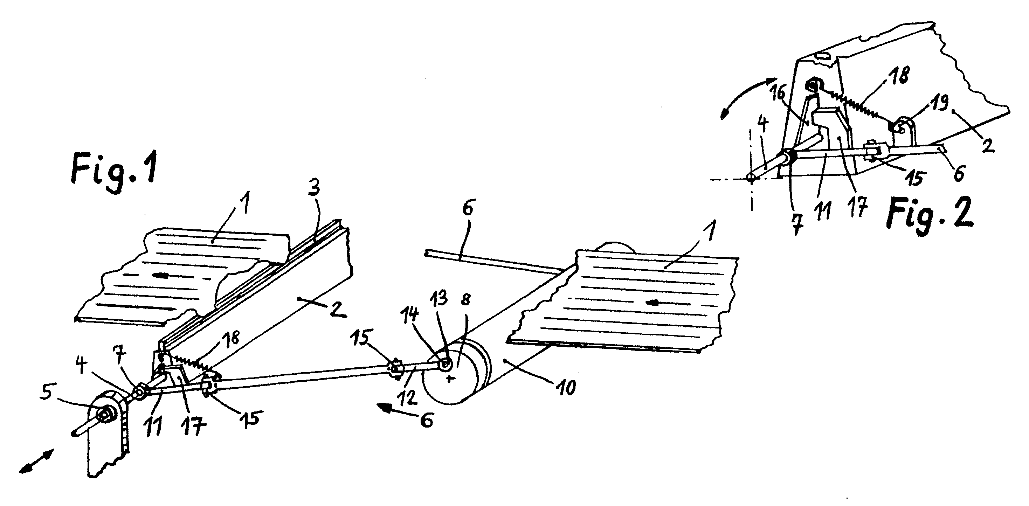

Wie Fig. 2 am besten erkennen läßt, liegt in der zum Förderband 1 senkrechten Normalstellung der Abstreifleiste 2 eine an deren Stirnseite sowie auf dem Achsschenkel 4 befestigte Scheibe 16 an einem an dem Endglied 11 befestigten Anschlag 17 an unter der Kraft einer Feder 18, die einerseits an der Abstreifleiste 2 und andererseits am Ende des Hauptteils der Stange 6 in einer Öse 19 befestigt ist. Die gleiche Anordnung findet sich am anderen, weggebrochenen Ende der Abstreifleiste 2.

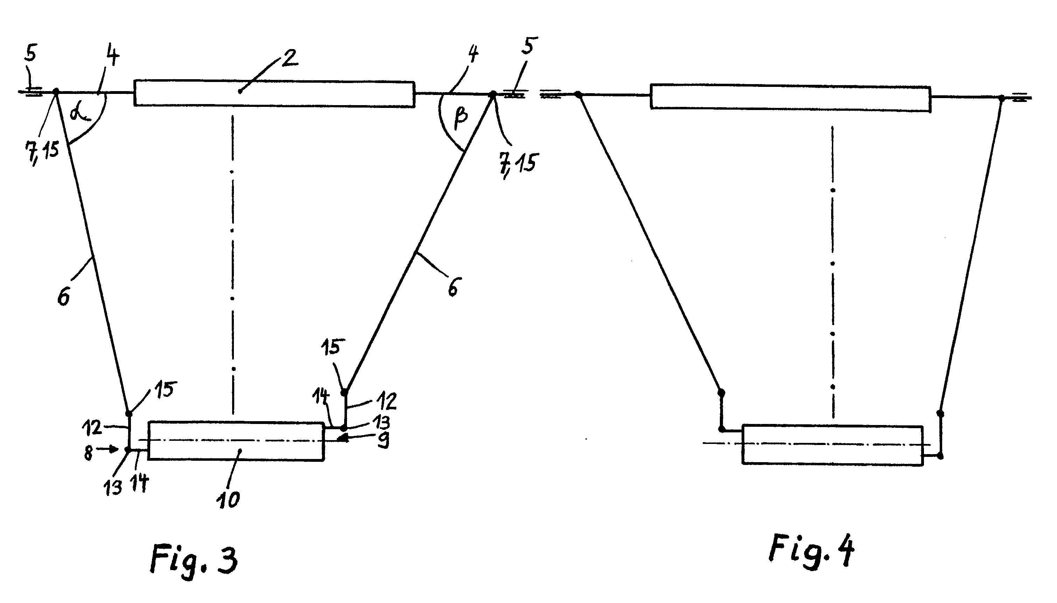

Die Rolle 10 wird durch das Förderband 1 in Drehung versetzt. Wie Fig. 3 und 4 (in denen die Endglieder 11 nicht gezeichnet sind) verdeutlichen, schiebt dabei immer das eine Exzenter die Stange 6 vor und das andere zieht sie an. Da die Stangen 6 unter den spitzen Winkeln α und β an den Achsschenkeln 4 angreifen,setzt sich die Bewegung der Stangen 6 in Hin- und Herbewegung der Abstreifleiste 2 um. Die Achsschenkel 4 verschieben sich dabei axial in den Lagern 5. Diese sind etwas nachgiebig angeordnet, um Schläge beim Wechseln von Zug auf Druck - die Hauptkräfte treten quer zu den Achsschenkeln 4 auf - zu vermeiden. Die in Fig. 3 eingezeichneten Winkel α und β sind im Prinzip ebenso vorhanden, wenn, wie nach Fig. 1 und 2, die Endglieder 11 vorgesehen sind. Für die Hin- und Herbewegung der Abstreifleiste 2 könnten die Stangen 6 statt zu divergieren auch konvergieren, d.h. etwa in der Mitte unmittelbar an der Abstreifleiste 2 angreifen. Es könnte dann dort eine den Teilen 16 bis 19 entsprechende Einrichtung angeordnet werden mit der Möglichkeit, den Anschlag auf einem den beiden Stangen gemeinsamen Teil anzuordnen.
Der Auf- und Abbewegung durch die Exzenter folgen die Stangen 6 in den Drehlagern 7. Die ständige alternierende Verwinkelung der Anschläge 17 an den beiden Enden der Abstreifleiste gegeneinander infolge der Gegenläufigkeit der Exzenter 8 und 9 hat kein störendes Ausmaß.

Das Abstreifblatt 3 ist in der Abstreifleiste 2 verschiebbar gehalten und wird durch ein in der Abstreifleiste 2 angeordnetes Luftfederkissen nach oben und an das Förderband 1 gedrückt. Lassen sich zu fest anhaftende Schmutzteile nicht abstreifen oder hat das Förderband Aufwulstungen o.dgl., gibt ihnen die Abstreifleiste durch Verschwenken in der Bandlaufrichtung nach. Dabei drehen sich die Achsschenkel 4 in den Lagern 5 und den Drehlagern 7, die Federn 18 werden stärker angespannt und die Scheiben 18 heben von den Anschlägen 17 ab.

**Patentansprüche**

1. Abstreifer für ein Förderband (1), der eine quer zu dem Förderband (1) ausgerichtete, mit einer Kante an ihm anliegende Abstreifleiste (2) aufweist, die mittels eines Antriebs (10) in ihrer Längsrichtung bewegt ist,
dadurch gekennzeichnet,
daß der Antrieb (10) durch eine an dem Förderband (1) reibschlüssig anliegende Rolle (10) gebildet ist.

2. Abstreifer nach Anspruch 1,
dadurch gekennzeichnet,
daß die Abstreifleiste (2) für eine Hin- und Herbewegung axial verschiebbar gelagert (4,5) ist und die Rolle (10) über mindestens ein Exzenter (8;9) und eine gelenkig in einem spitzen Winkel (α;β) zu der Abstreifleiste (2) angreifende Stange (6) oder über zwei um 180° versetzte Exzenter und zwei in einem spitzen Winkel zu der Abstreifleiste angreifende Zug- lemente mit der Abstreifleiste gekoppelt ist, derart, daß von der einen bis zur anderen Extremstellung des Exzenters (8;9) die Stange (6) unter Vergrößerung des Winkels (α;β) zieht und von der anderen zur einen Extremstellung des Exzenters (8;9) unter Verkleinerung des Winkels ($\alpha$;$\beta$) drückt bzw. die beiden Zugelemente abwechselnd von der einen bis zur anderen Endstellung der Exzenter ziehen.

3. Abstreifer nach Anspruch 2,
dadurch gekennzeichnet,
daß die Rolle (10) über zwei um 180° versetzte Exzenter (8;9) und zwei Stangen (6) mit der Abstreifleiste (2) gekoppelt ist.

4. Abstreifer nach Anspruch 2 oder 3,
dadurch gekennzeichnet,
daß die beiden um 180° versetzten Exzenter (8;9) an den beiden verschiedenen Stirnseiten der Rolle (10) angeordnet sind.

5. Abstreifer nach einem der Ansprüche 2 bis 4,
dadurch gekennzeichnet,
daß die Stange (6) kurze Endglieder (12;11) aufweist, die an den Enden einerseits das Exzenterlager (13) und andererseits ein Drehlager (7) aufweisen, in dem die Stange (6) dem Exzenterumlauf folgend schwenkbar ist, und die mit dem dazwischenliegenden Hauptteil der Stange (6) durch Gelenke (15) verbunden sind, in denen die Stange (6) der genannten Vergrößerung und Verkleinerung ihres genannten Angriffswinkels ($\alpha$;$\beta$) folgend schwenkbar ist.

6. Abstreifer nach einem der Ansprüche 2 bis 5,
dadurch gekennzeichnet,
daß die axiale Lagerung (5) der Abstreifleiste (2) in Förderbandlaufrichtung etwas nachgiebig gehalten ist.

7. Abstreifer nach einem der Ansprüche 2 bis 6,
dadurch gekennzeichnet,
daß die Abstreifleiste (2) aus einer, vorzugsweise zur Förderbandebene senkrechten, Normalstellung in Förderbandlaufrichtung herausschwenkbar ist und die Schwenkachse durch zwei an die Abstreifleiste angesetzte Achsschenkel (4) gebildet ist, die drehbar und axial verschiebbar gelagert (5) sind und an denen die Stangen (6) bzw. Zugelemente mit Drehlagern (7) angreifen.

8. Abstreifer nach einem der Ansprüche 2 bis 7,
dadurch gekennzeichnet,
daß die Abstreifleiste (2) ein in Normalstellung senkrecht zur Förderbandebene federnd nachgiebig gehaltenes Abstreifblatt (3) aufweist.

Fig.1

Fig.2

EP 0 458 117 A2

Fig. 3

Fig. 4

EP 0 458 117 A2